(19) **Europäisches Patentamt**

**European Patent Office**

**Office européen des brevets**

(11) **EP 1 226 056 B1**

(12) **EUROPÄISCHE PATENTSCHRIFT**

(45) Veröffentlichungstag und Bekanntmachung des Hinweises auf die Patenterteilung:
**22.12.2004 Patentblatt 2004/52**

(21) Anmeldenummer: **01909485.3**

(22) Anmeldetag: **17.01.2001**

(51) Int Cl.$^7$: **B60T 8/40**

(86) Internationale Anmeldenummer:
**PCT/DE2001/000176**

(87) Internationale Veröffentlichungsnummer:
**WO 2001/060670 (23.08.2001 Gazette 2001/34)**

(54) **VERFAHREN UND VORRICHTUNG ZUR BESTIMMUNG DER TEMPERATUR EINER HYDRAULIK-BREMSANLAGE EINES KRAFTFAHRZEUGS**

METHOD AND DEVICE FOR DETECTING THE TEMPERATURE OF A HYDRAULIC BRAKING SYSTEM IN A MOTOR VEHICLE

PROCEDE ET DISPOSITIF PERMETTANT DE DETERMINER LA TEMPERATURE D'UN SYSTEME DE FREINAGE HYDRAULIQUE D'UNE AUTOMOBILE

(84) Benannte Vertragsstaaten:
**DE FR GB**

(30) Priorität: **15.02.2000 DE 10006619**

(43) Veröffentlichungstag der Anmeldung:
**31.07.2002 Patentblatt 2002/31**

(73) Patentinhaber: **ROBERT BOSCH GMBH**
**70442 Stuttgart (DE)**

(72) Erfinder: **YU, Jingsheng**
**Farmington Hills, MI 48331 (US)**

(56) Entgegenhaltungen:
**DE-A- 19 651 154        DE-A- 19 729 097**
**DE-A- 19 859 280**

## Beschreibung

Stand der Technik

Die Erfindung geht aus von einem Verfahren zur Bestimmung der Temperatur einer Hydraulik-Bremsanlage eines Kraftfahrzeugs nach der Gattung des Hauptanspruchs. Aus der DE 196 51 154 Al ist schon ein Verfahren und eine Vorrichtung zur Steuerung einer Bremsanlage bekannt, bei der ein elektrisch betriebener Pumpenmotor eine Hydraulikpumpe einer Bremsanlage ein- und ausgeschaltet wird. Die während des Betriebes auftretende Temperaturerhöhung wird nicht direkt gemessen, sondern aus dem Verlauf der Motorspannung geschätzt, die sich nach dem Ausschalten der Hydraulikpumpe am Ausgang des Pumpenmotors ergibt. Ein weiterer Parameter, der zur Schätzung der Temperatur herangezogen wird, ist die Motordrehzahl, die beim Ausschalten der Pumpe überwacht wird. Die geschätzte Temperatur des Hydraulikagregates bzw. der Bremsanlage wird zur Verbesserung der Druckregelung beispielsweise für ein Antiblockierbremssystem (ABS) verwendet.

Es hat sich jedoch herausgestellt, dass die Abschätzung der Temperatur der Bremsanlage aus dem Spannungsverlauf des Pumpenmotors nach dessen Ausschalten relativ ungenau ist und beispielsweise bei tiefen Temperaturen den dynamischen Druckaufbau nicht hinreichend erfaßt.

Vorteile der Erfindung

Das erfindungsgemäße Verfahren zur Bestimmung der Temperatur einer Hydraulik-Anlage eines Kraftfahrzeugs mit den kennzeichnenden Merkmalen des Hauptanspruchs hat demgegenüber den Vorteil, dass nicht der Spannungsverlauf des Pumpenmotors nach dem Ausschalten gemessen wird, sondern ein Modell gebildet wird, das mit Hilfe der Versorgungsspannung und der Motorspannung die Temperatur des Pumpenmotors nach dem Einschalten ermittelt. Durch das Anlaufverhalten des Pumpenmotors mit der Hydraulikpumpe lassen sich Temperaturänderungen unter Berücksichtigung der individuellen Pumpentoleranzen und Druckänderungen im Hydrauliksystem besser und genauer erfassen als bei der Messung des Spannungsverlaufs beim Ausschalten, da die Spannung nicht nur von der Temperatur abhängig ist.

Durch die in den abhängigen Ansprüchen aufgeführten Maßnahmen sind vorteilhafte Weiterbildungen und Verbesserungen des im Hauptanspruch angegebenen Verfahrens möglich. Besonders vorteilhaft ist, dass das Modell einen Zustandsbeobachter aufweist, der mit seinen Gleichungen aus den Eingangsparametern ohne zusätzliche Sensorik eine Schätzfunktion für die Temperatur der Hydraulikpumpe simuliert.

Besonders vorteilhaft ist, dass die Schätzfunktion nach einer vorgegebenen Zeitspanne ermittelt wird.

Die Zeitspanne wird dabei so gewählt, dass möglichst noch keine Änderung der Temperatur stattfindet.

Durch einfaches Vergleichen der ermittelten Schätzfunktion mit gespeicherten Tabellenwerten oder einer Kurve lässt sich am leichtesten die zugehörige Temperatur ermitteln, da diese Werte leicht durch Messung empirisch erfassbar sind.

Günstig ist auch, die ermittelten Werte für die Temperatur als Funktion nachzubilden, da eine Funktion sich mit einem Rechner noch leichter auswerten lässt und weniger Speicherplatz benötigt. Dabei hat sich vorteilhaft gezeigt, dass ein Polynom zweiter Ordnung eine gute Näherung darstellt.

Da sich das Verfahren leicht in ein Softwareprogramm einbetten lässt, ergibt sich vorteilhaft eine preiswerte Realisierungsmöglichkeit. Hinzu kommt, daß ein Progrmm sich leichter anpassen läßt als eine Hardwarelösung.

Vorteile bietet auch eine nach dem Verfahren ausgebildete Vorrichtung für ein Bremssystem, da das Verfahren leicht in die bestehenden Programme des Bremssystems integriert werden kann. Auf diese Weise läßt sich vorteilhaft der notwendige Bremsdruck unter Berücksichtigung der Temperatur der Bremsanlage besser regeln. Das ist insbesondere beim Antiblockierschutz (ABS) oder für die Antischlupfregelung (ASR) und dergleichen wichtig.

Zeichnung

Ein Ausführungsbeispiel der Erfindung ist in der Zeichnung dargestellt und in der nachfolgenden Beschreibung näher erläutert. Es zeigen Figur 1 ein Blockschaltbild, Figur 2 zeigt ein Diagramm mit Spannungskurven und Figur 3 zeigt ein Diagramm mit Temperaturkurven.

Beschreibung des Ausführungsbeispiels

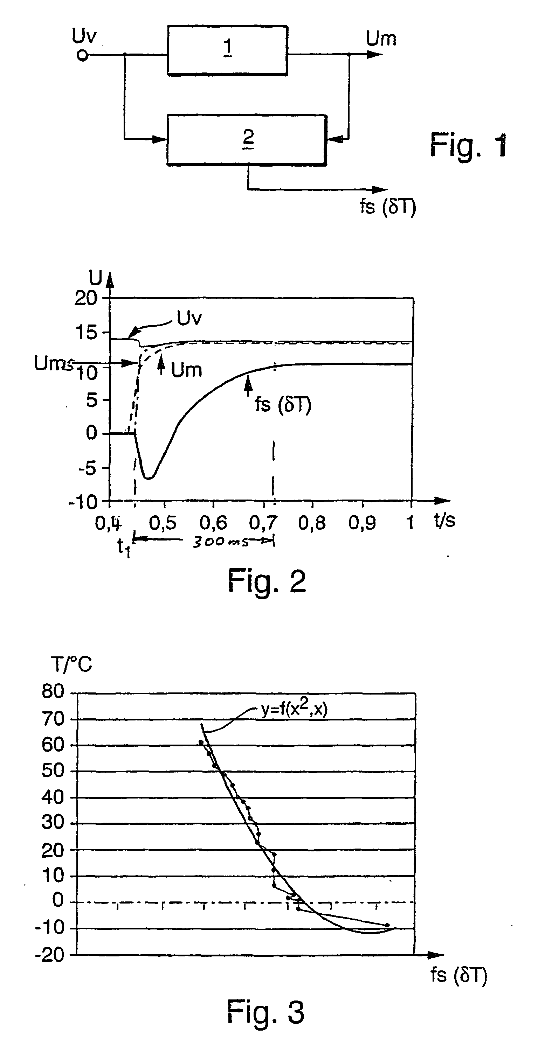

Figur 1 zeigt einen Stromlaufplan eines Blockdiagramms mit einem Zustandsbeobachter, der als Regelschleife ausgebildet ist. In diesem Blockdiagramm wird einem Pumpenmotor 1 die Versorgungsspannung $U_V$ zugeführt und am Ausgang des Pumpenmotors 1 die Motorspannung $U_m$ erfasst. Die Spannungen werden vorzugsweise in ihrem zeitlichen Verlauf gemessen und gespeichert. Parallel zum Pumpenmotor 1 ist der Zustandsbeobachter 2 angeordnet, dem die Versorgungsspannung $U_V$ und die Motorspannung $U_m$ zugeführt werden. Der Zustandsbeobachter 2 bildet daraus eine Schätzfunktion $f_S(\delta T)$ für einen temperaturabhängigen Term eines angenommenen Simulationsmodells, das später noch näher erläutert wird. Dieses Prinzip der Modellbildung mit einem Zustandsbeobachter ist in der Theorie der Regelungstechnik per se bekannt. Hier wird es zur Bestimmung der Temperatur als Störgröße herangezogen. Dabei wird bei der Modellbildung von der Überlegung ausgegangen, dass der Wärmeübergang zwischen dem Pumpenmotor 1 und dem restlichen Hydroaggregat wegen der engen mechanischen Kopplung so gut ist, dass von einem linearen Zusammenhang ausgegangen werden kann. Somit kann für eine zu bildende Schätzfunktion $f_s(\delta T)$ der Zusammenhang mit der Temperatur T, die am Pumpenmotor 1 oder dem Hydroaggregat gemessen wird, in Form einer Tabelle oder Kurve erstellt werden.

Anhand der Figuren 2 und 3 wird die Funktionsweise näher erläutert.

Für das Dynamikmodell des Pumpenmotors 1 wird eine Gleichung

$$\frac{dx}{dt} = f(T_0) + f_s(\delta T) \qquad (1)$$

gebildet. Der erste Term $f(T_0)$ bildet dabei einen temperaturunabhängigen Term, der beispielsweise auf die Raumtemperatur oder eine beliebige andere Temperatur wie dem Nullpunkt bezogen ist. Dieser erste Term kann am einfachsten durch eine empirische Messung des Spannungsverlaufs der Motorspannung Um beispielsweise bei der vorgegebenen Temperatur To bestimmt werden.

Der zweite Term $f_s(\delta T)$ der obigen Gleichung ist das eigentliche Störmodell, das sich in Abhängigkeit von der Temperaturänderung $\delta T$ ändert. Dieser Term ist zunächst unbekannt und wird gemäß der nachfolgenden Beschreibung mittels des Zustandsbeobachters ermittelt.

Entsprechend des Modells gemäß der Gleichung (1) wird der Zustandsbeobachter wie folgt definiert:

$$\dot{\underline{x}} = A^*\underline{x} + b^*u$$

$$y = C^*\underline{x} \qquad (2)$$

wobei A, b und C Systemparameter sind. Die Parameter u und y kennzeichnen die Messsignale der Pumpenmotorspannung und der Versorgungsspannung. $\underline{x}$ ist ein Zustandsvektor, der die Funktion $f_s(\delta T)$ als eine der Zustandsgrößen enthält. Diese Annahmen gelten für eine begrenzte Schätzzeit $t_s$, in der der Zustandsbeobachter als konstant angenommen werden kann. Experimentell wurde festgestellt, dass die Schätzzeit $t_s$ maximal 300 ms betragen kann, d. h. die Temperatur bleibt bis zu 300 ms etwa konstant. Die Bestimmung der Schätzfunktion $f_s(\delta T)$ kann somit mit hinreichender Genauigkeit 300 ms nach dem Einschalten der Versorgungsspannung $U_V$ erfolgen.

Die Modellgleichungen (2) für den Zustandsbeobachter werden am Einfachsten mit einem Softwareprogramm realisiert. Da heutige Bremssysteme bereits programmgesteuerte Rechner aufweisen, kann ein bestehendes Programm vorteilhaft entsprechend erweitern werden. Dieses Programm liefert gemäß der Figur 2 somit beispielsweise 300 ms nach dem Einschalten $t_I$ der Versorgungsspannung $U_V$ einen Wert für die Schätzfunktion $f_s(\delta T)$. Diesert Wert ist ein Referenzspannungswert, der in eine entsprechende Temperatur umgewandelt werden muss. Die erfolgt mittels einer gespeicherten Tabelle oder mit Hilfe des Diagramms der Figur 3. Hier wurde bei verschiedenen Temperaturen experimentell der Zusammenhang zwischen der Temperatur des Bremssystems (Pumpenmotor 1) und der Schätzfunktion $f_s(\delta T)$ ermittelt. Die gepunktete Kurve zeigt die Schätzfunktion $f_S(bT)$ für die einzelnen Messpunkte. Um diese Messkurve rechnerisch besser verarbeiten zu können, wurde sie mit einem Polynom zweiter Ordnung

$$y = f(x^2, x)$$

angenähert. Dieses Polynom wird nun als Näherungsfunktion für die Schätzfunktion zur Temperaturbestimmung verwendet.

Ergänzend ist in Figur 2 noch die Kurve für die geschätzte Motorspannung in Abhängigkeit von der Zeit dargestellt.

Die Versorgungsspannung $U_V$ fällt dabei nach dem Einschalten zum Zeitpunkt $t_I$ der Motorspannung $U_m$ etwas ab und bleibt dann stabil. Die Motorspannung $U_m$ steigt nach dem Einschalten nach Ablauf einer durch den Pumpenmotor 1 bedingten Zeitkonstante an, bis sie den Wert der Versorgungsspannung $U_V$ erreicht hat. Die Kurve für die Schätzfunktion $f_S(\delta T)$ fällt zunächst ab und steigt dann asymptotisch an. Nach kurzer Zeit, beispielsweise etwa 300 ms ist der Wert für die Schätzfunktion $f_S(\delta T)$ stabil.

Wie dem Diagramm der Figur 3 weiter entnehmbar ist, ist die Temperaturdifferenz zwischen der gemessenen und durch das Polynom geschätzten Temperatur kleiner als 10°C. Dieses Ergebnis ist beispielsweise für eine Bremsregelung (ABS, ASR) oder Fahrdynamikregelung (FDR) eines Fahrzeuges ausreichend und stellt eine gute Verbesserung im Vergleich zu dem bekannten Verfahren dar, insbesondere da kein zusätzlicher Sensor zur Messung der Temperatur benötigt wurde.

**Patentansprüche**

1. Verfahren zur Bestimmung der Temperatur einer Hydraulik- Bremsanlage eines Kraftfahrzeugs, wobei eine von einem Elektromotor angetriebene Hydraulikpumpe der Bremsanlage zeitweise ein- und ausgeschaltet wird und wobei die Temperatur des Pumpenmotors (1) aus dem Verlauf der Motorspannung ($U_m$) abgeleitet wird, **dadurch gekennzeichnet, dass** die Motorspannung ($U_m$) und die Versor-

gungsspannung ($U_V$) nach dem Einschalten des Pumpenmotors (1) gemessen wird, und dass aus der Motorspannung ($U_m$) und der Versorgungsspannung ($U_V$) mittels eines Modells, das eine temperaturabhängige Schätzfunktion $f_s(\delta T)$ enthält, die Temperatur ($\delta T$) des Pumpenmotors (1) bestimmbar ist.

2. Verfahren nach Anspruch **1, dadurch gekennzeichnet, dass** das Modell nach der Gleichung

$$\frac{dx}{dt} = f(T_0) + f_s(\delta T)$$

gebildet wird, wobei $f(T_0)$ ein temperaturunabhängiger Term und $f_s(\delta T)$ ein temperaturabhängiges Störmodell ist.

3. Verfahren nach Anspruch 1 oder 2, **dadurch gekennzeichnet, dass** das Modell einen Zustandsbeobachter aufweist, der nach folgenden Gleichungen gebildet ist:

$$\dot{\underline{x}} = A*\underline{x} + b*u$$

$$y = C*\underline{x}$$

wobei A, b und C Systemparameter sind, u, y jeweils die gemessenen Werte für die Versorgungs- und Pumpenspannung beinhalten und $\underline{x}$ ein Zustandsvektor ist, der die temperaturabhängige Schätzfunktion ($f_s(\delta T)$) als Zustandsgröße enthält.

4. Verfahren nach einem der Ansprüche 1 bis 3, **dadurch gekennzeichnet, dass** die Schätzfunktion ($f_s(\delta T)$) nach einer vorgegebenen Zeitspanne, vorzugsweise 300 ms ermittelt wird.

5. Verfahren nach Anspruch 4, **dadurch gekennzeichnet, dass** die Temperatur des Pumpenmotors (1) an Hand einer Tabelle in Bezug auf den ermittelten Wert für die Schätzfunktion ($f_S(\delta T)$) ermittelt wird.

6. Verfahren nach einem der vorhergehenden Ansprüche, **dadurch gekennzeichnet, dass** die temperaturabhängigen Vergleichswerte für die Schätzfunktion in Form einer Tabelle oder einer Kurve gespeichert sind.

7. Verfahren nach Anspruch 6, **dadurch gekennzeichnet,**
**dass** die Vergleichswerte für die Temperatur in der Tabelle oder für die Kurve empirisch ermittelt wurden.

8. Verfahren nach einem der Ansprüche 6 bis 7, **dadurch gekennzeichnet, dass** die Kurve durch Regression, vorzugsweise als Polynom zweiter Ordnung nachgebildet ist.

9. Verfahren nach einem der vorhergehenden Ansprüche, **dadurch gekennzeichnet, dass** das Schätzmodell in Form eines Softwareprogramms ausgebildet ist.

10. Vorrichtung zur Bestimmung der Temperatur einer in einem Bremssystem eines Kraftfahrzeugs befindlichen Hydraulik-Bremsanlage, wobei das Bremssystem mit einem Antiblockierschutz oder einer Antischlupfregelung (ABS, ASR) ein Programm aufweist, welches

- eine von einem Elektromotor angetriebene Hydraulikpumpe der Bremsanlage zeitweise ein- und ausgeschaltet und
- die Temperatur des Pumpenmotors (1) aus dem Verlauf der Motorspannung ($U_m$) ableitet,

**dadurch gekennzeichnet, dass** das Programm

- die Motorspannung ($U_m$) und die Versorgungsspannung ($U_V$) nach dem Einschalten des Pumpenmotors (1) erfasst, und
- aus der Motorspannung ($U_m$) und der Versorgungsspannung ($U_V$) mittels eines Modells, das eine temperaturabhängige Schätzfunktion $f_s(\delta T)$ enthält, die Temperatur ($\delta T$) des Pumpenmotors (1) bestimmt.

11. Vorrichtung nach Anspruch 10, **dadurch gekennzeichnet, dass** das Bremssystem ausgebildet ist, die ermittelte Temperatur zur Korrektur des Bremsdrucks zu verwenden.

## Claims

1. Method for determining the temperature of a hydraulic braking system in a motor vehicle, a hydraulic pump, driven by an electric motor, of the braking system being switched on and off temporarily, and the temperature of the pump motor (1) being derived from the profile of the motor voltage ($U_m$), **characterized in that** the motor voltage ($U_m$) and the supply voltage ($U_v$) are measured after the pump motor (1) has been switched on, and **in that** the temperature ($\delta T$) of the pump motor (1) can be determined from the motor voltage ($U_m$) and the supply voltage ($U_v$) by means of a model which includes a temperature-dependent estimation function $f_s(\delta T)$.

2. Method according to Claim 1, **characterized in that** the model is formed by using the equation

$$\frac{dx}{dx} = f(T_0) + f_s(\delta T)$$

$f(T_0)$ being a temperature-independent term, and $f_s(\delta T)$ being a temperature-dependent disturbance model.

3. Method according to Claim 1 or 2, **characterized in that** the model has a state observer which is formed using the following equations:

$$\dot{\underline{x}} = A * \underline{x} + b * u$$

$$y = C * \underline{x}$$

A, b and C being system parameters, u, y respectively including the measured values for the supply voltage and pump voltage, and $\underline{x}$ being a state vector which includes the temperature-dependent estimation function ($f_s(\delta T)$) as state variable.

4. Method according to one of Claims 1 to 3, **characterized in that** the estimation function ($f_s(\delta T)$) is determined after a prescribed time interval, preferably 300 ms.

5. Method according to Claim 4, **characterized in that** the temperature of the pump motor (1) is determined with the aid of a table with reference to the determined value for the estimation function ($f_s(\delta T)$).

6. Method according to one of the preceding claims, **characterized in that** the temperature-dependent comparative values for the estimation function are stored in the form of a table or a curve.

7. Method according to Claim 6, **characterized in that** the comparative values for the temperature in the table or for the curve are determined empirically.

8. Method according to one of Claims 6 to 7, **characterized in that** the curve is simulated by regression, preferably as a second-order polynomial.

9. Method according to one of the preceding claims, **characterized in that** the estimation model is in the form of a software program.

10. Apparatus for determining the temperature of a hydraulic braking system located in a braking system of a motor vehicle, the braking system with antilock protection or traction control (ABS, ASR) having a program which

- temporarily switches on and off a hydraulic pump of the braking system that is driven by an electric motor, and
- derives the temperature of the pump motor (1) from the profile of the motor voltage ($U_m$),

**characterized in that** the program

- detects the motor voltage ($U_m$) and the supply voltage ($U_v$) after the pump motor (1) has been switched on, and
- determines the temperature ($\delta T$) of the pump motor (1) from the motor voltage ($U_m$) and the supply voltage ($U_v$) by means of a model which includes a temperature-dependent estimation function $f_s(\delta T)$.

11. Apparatus according to Claim 10, **characterized in that** the braking system is designed to use the determined temperature to correct the brake pressure.

**Revendications**

1. Procédé permettant de déterminer la température d'une installation de freinage hydraulique d'un véhicule automobile, selon lequel une pompe hydraulique de l'installation de freinage entraînée par un moteur électrique est mise sous tension et hors tension par intermittence et la température du moteur de pompe (1) est déduite à partir de l'évolution de la tension du moteur ($U_m$),
**caractérisé en ce que**
la tension moteur ($U_m$) et la tension d'alimentation ($U_v$) sont mesurées après la mise sous tension du moteur de pompe (1), et la température ($\delta T$) du moteur de pompe (1) peut être définie à partir de la tension moteur ($U_m$) et de la tension d'alimentation ($U_v$) au moyen d'un modèle contenant un estimateur $f_s(\delta T)$ dépendant de la température.

2. Procédé selon la revendication 1,
**caractérisé en ce que**
le modèle est formé d'après l'équation

$$\frac{dx}{dt} = f(T_0) + f_s(\delta T)$$

où $f(T_0)$ est un terme dépendant de la température et $f_s(\delta T)$ est un modèle de perturbation dépendant de la température.

3. Procédé selon la revendication 1 ou 2,
**caractérisé en ce que**
le modèle présente un observateur d'états formé d'après les équations suivantes :

$$\underline{x} = A*\underline{x} + b*u$$

$$y = C*\underline{x}$$

où A, b et C sont des paramètres de système, u et y représentent respectivement les valeurs mesurées pour la tension d'alimentation et la tension de la pompe, et x est un vecteur d'état qui contient l'estimateur dépendant de la température ($f_s(\delta T)$) comme grandeur d'état.

4. Procédé selon l'une des revendications 1 à 3, **caractérisé en ce que** l'estimateur ($f_s(\delta T)$) est obtenu après un intervalle de temps prédéterminé, de préférence 300 ms.

5. Procédé selon la revendication 4, **caractérisé en ce que** la température du moteur de pompe (1) est obtenue au moyen d'un tableau par rapport à la valeur obtenue pour l'estimateur ($f_s(\delta T)$).

6. Procédé selon l'une des revendications précédentes, **caractérisé en ce que** les valeurs de comparaison pour l'estimateur qui sont dépendantes de la température sont mémorisées sous la forme d'un tableau ou d'une courbe.

7. Procédé selon la revendication 6, **caractérisé en ce que** les valeurs de comparaison pour la température sont obtenues de manière empirique dans le tableau ou pour la courbe.

8. Procédé selon l'une des revendications 6 à 7, **caractérisé en ce que** la courbe est reproduite par régression, de préférence sous la forme de polynôme de deuxième ordre.

9. Procédé selon l'une des revendications précédentes, **caractérisé en ce que** le modèle d'estimation est configuré sous la forme d'un programme logiciel.

10. Dispositif permettant de déterminer la température d'une installation de freinage hydraulique se trouvant dans un système de freinage d'un véhicule automobile, le système de freinage présentant un programme comportant une protection anti-blocage ou une régulation anti-patinage à l'accélération (ABS, ASR), qui :

    - met sous tension et hors tension par intermittence une pompe hydraulique de l'installation de freinage qui est entraînée par un moteur électrique et
    - déduit la température du moteur de pompe (1) à partir de l'évolution de la tension du moteur ($U_m$),

**caractérisé en ce que** le programme :

    - saisit la tension du moteur ($U_m$) et la tension d'alimentation ($U_v$) après la mise sous tension du moteur de pompe (1), et
    - définit la température ($\delta T$) du moteur de pompe (1) à partir de la tension moteur ($U_m$) et de la tension d'alimentation ($U_v$) au moyen d'un modèle contenant un estimateur $f_s(\delta T)$ dépendant de la température.

11. Dispositif selon la revendication 10, **caractérisé en ce que** le système de freinage est configuré pour utiliser la température obtenue dans le but de corriger la pression de freinage.

Fig. 1

Fig. 2

Fig. 3